# EUROPÄISCHE PATENTSCHRIFT

(11) **EP 2 276 644 B1**
(45) Veröffentlichungstag und Bekanntmachung des Hinweises auf die Patenterteilung: **18.07.2012**
(21) Anmeldenummer: 09742172.1
(22) Anmeldetag: 11.05.2009
(51) Int. Cl.: B60K 15/04

(54) **STUTZENABSCHLUSS FÜR EINEN EINFÜLLSTUTZEN**
NECK END FOR A FILLER NECK
RACCORD POUR TUBULURE DE REMPLISSAGE

(30) Priorität: 09.05.2008 DE 102008022912
(43) Veröffentlichungstag der Anmeldung: 26.01.2011
(73) Patentinhaber: Gerdes GmbH, 50170 Kerpen (DE)
(72) Erfinder: GERDES, Ralf, 50937 Köln (DE)
(74) Vertreter: Bungartz, Klaus Peter
(86) Internationale Anmeldenummer: PCT/EP2009/055682
(87) Internationale Veröffentlichungsnummer: WO 2009/135954

(56) Entgegenhaltungen:
- EP-A- 1 086 842
- EP-A1- 1 690 726
- AT-U1- 9 752
- BE-A5- 1 016 911
- DE-A1-102005 047 459
- DE-C1- 3 223 991
- DE-U1-202005 012 620
- FR-A- 2 905 638
- FR-A1- 2 753 139
- GB-A- 2 424 870
- US-A- 4 265 752
- US-A- 4 715 509
- US-A1- 2006 060 581
- JOSEPH FORNUTO ET AL: "Fuel filler cap" RESEARCH DISCLOSURE, MASON PUBLICATIONS, HAMPSHIRE, GB, Bd. 352, Nr. 59, 1. August 1993 (1993-08-01), XP007119266 ISSN: 0374-4353

## Beschreibung

### Technisches Gebiet

Die Erfindung betrifft einen Stutzenabschluss für einen Einfüllstutzen eines Behälters, insbesondere eines Tanks eines Kraftfahrzeugs, mit einem Rohrstück und einem Verschlussmechanismus, der eine in dem Rohrstück angeordnete oberen Schwenkklappe und eine darunter angeordnete untere Dichtklappe aufweist, wobei die obere Schwenkklappe und die untere Dichtklappe in dem Rohrstutzen einseitig um einen Anlenkpunkt angelenkt sind und durch den Druck eines eingeführten Einfüllrohres jeweils die obere Schwenkklappe mit ihrem dem Anlenkpunkt gegenüberliegenden Ende längs einer ersten Kreissegmentbahn infolge einer Schwenkbewegung um den Anlenkpunkt geöffnet werden kann und die untere Dichtklappe infolge einer Schwenkbewegung um den Anlenkpunkt längs einer zweiten Kreissegmentbahn geöffnet werden kann. Die untere Dichtklappe ist dabei derart angeordnet, dass sie im geschlossenen Zustand in einem Winkel zu der rechtwinklig zur Stutzenachse (S) angeordneten Querschnittsebene angeordnet ist.

Stutzenabschlüsse werden meist ohne zusätzlichen Deckel hinter einer Schwenkklappe zum Verschließen eines Kraftstofftankes eines Kraftwagens verwendet. Die Erfindung ist allerdings auf diese Anwendung nicht beschränkt, sondern soll sich auf alle Stutzenabschlüsse für andere, befüllbare Behälter beziehen, die über eine Doppelklappe selbsttätig verschließbar sind, auch wenn diese einen zusätzlichen Deckel aufweisen oder fest mit einem Stutzenrohr verbunden sind. Solche Behälter können zum Beispiel Öltanks für das Motoröl von Kraftfahrzeugen oder auch Wassertanks von Schiffen etc. sein.

### Stand der Technik

Ein Stützenabschluss der eingangs genannten Art ist aus der AT 009 752 U1 bekannt. Hier ist ein Tankstutzen beschrieben, der eine schräg gestellte untere Dichtklappe aufweist, die unterhalb des Schwenkbereiches einer oberen Klappe angelenkt ist, somit zum Öffnen um mehr als 90° aufgeschwenkt werden muss. Obwohl im geschlossenen Zustand die Kombination beider Klappen einen kleineren Bauraum einnimmt, ergibt sich hier keine Reduzierung des für den funktionalen Bereich notwendigen Raumbedarfs, da der durch die schräggestellte untere Dichtklappe gewonnene Raum durch den erhöhten Schwenkradius wieder kompensiert wird.

Ohne Notwendigkeit eines Deckels verschließbare Stutzenabschlüsse sind ferner aus der DE 203 09 799.8 U bekannt. Bei dem dort beschriebenen Stutzenabschluss wird der Stutzen über zwei Klappen verschlossen, die übereinander im Stutzen angeordnet sind und durch die Kraft jeweils einer Verschlussfeder in Anlage an eine Dichtfläche gehalten sind. Durch Einstecken des Ausgaberohrs einer Zapfpistole oder einer Tülle eines Reservekanisters werden die beiden Klappen nach unten gedrückt, so dass sich eine durchgängige Öffnung ergibt.

Obwohl dieser Verschluss eine gute Dichtung auch ohne zusätzlichen Tankdeckel bietet, wäre es doch wünschenswert, wenn sie weiter verbessert werden könnten und zusätzlich eine Sicherung gegen Fehlbetankung aufweisen würden. Insbesondere im Falle moderner Motoren ist es zunehmen wichtig, auf die sichere Kraftstoffsorte zu achten, da beispielsweise moderne Einspritzsystem einer Common-Rail-Dieseleinspritzung über den Schmierstoffgehalt des Dieseltreibstoffs geschmiert werden und bereits nach kurzer Betriebszeit mit einem Ottokraftstoff schweren Schaden nehmen können.

Die EP 1319545 A beschreibt ein solches Verfahren zum Verhindern von Befüllen eines Stutzens mit ungeeignetem Kraftstoff. Hierzu sind in dem Stutzen über den Umfang verteilte Haken angeordnet, die einen gebogenen mittleren Bereich aufweisen, der von dem vorderen Rand der Zapfpistole dann weggedrückt wird, wenn die Zapfpistole einen hinreichenden Durchmesser aufweist. Dies führt dazu, dass bei Einschieben einer zu kleinen Zapfpistole die Haken zumindest nicht alle nach außen verdrängt werden können, wobei dann aber der untere Teil der Zapfpistole mit den nicht nach außen gedrückten Endbereichen der Haken in Eingriff kommt, so dass die Zapfpistole nicht weiter in den Stutzen eingeführt werden kann, sondern sich verhakt.

Obwohl dieser Stutzen eine Möglichkeit bietet, Fehlbetankungen zu vermeiden, weist er doch den Nachteil auf, dass zwar die Zapfpistole nicht ganz in den Stutzen eingeführt werden kann, aber bei entsprechender Missachtung der Sicherheitsvorschrift dennoch ein Befüllen des Stutzens mit zumindest einer kleinen Menge möglich wäre, weil durch die Sicherheitselemente kein Deckel blockiert wird, sondern lediglich das Einschieben der Zapfpistole in den Stutzen verhindert wird. Dies verhindert aber nicht, dass bei eingehaktem, zu kleinem Rohr der Zapfpistole nicht die Füllfunktion betätigt werden kann, so dass dann Kraftstoff einer ungeeigneten Sorte in den Stutzen einläuft.

Ein weiterer Nachteil dieser Ausgestaltung besteht darin, dass das Verdrängen der Haken mechanisch sehr aufwendig ist, was zu einer unzuverlässigen Funktion führt. So kann beispielsweise durch verkantetes und mit einer gewissen Kraft erfolgtes Einsetzen der Zapfpistole ein Teil der Haken weggedrückt werden, so dass nur einige der Haken in Eingriff kommen, die in Folge der Funktion dann verbiegen können. Im Laufe der Zeit kann so der Stutzenabschluss beschädigt werden, insbesondere dann, wenn der Benutzer des Fahrzeugs mit Gewalt probiert, das Rohr der Zapfpistole einzuführen.

Die EP 1262355 A offenbart wiederum einen deckellosen Stutzenabschluss, der im unteren Bereich eine Sicherung gegen Befüllen mit falschem Kraftstoff aufweist. Hierzu ist oberhalb einer unteren Abdeckklappe ein quer zur Stutzenlängsachse verschiebbares Sicherungselement vorgesehen, dass durch den eindringenden Rohrabschnitt der Zapfpistole seitlich verdrängt wird. Durch diese Verdrängungsbewegung gerät ein Rand der unteren Abdeckplatte außer Eingriff, so dass eine Verriegelung, die sich durch diesen Eingriff zwischen dem Verschiebeelement und der unteren Abdeckklappe ergibt, aufgehoben wird und die Zapfpistole unter Aufschwenken der unteren Abdeckklappe weiter eingeschoben werden kann.

Diese Ausgestaltung weist zunächst den Nachteil auf, dass die Zapfpistole unmittelbar auf der unteren Abdeckklappe aufsetzt, also auf die eigentliche Verschlussklappe des Stutzens wirkt. Wird nun versucht, mit einer "falschen" Zapfpistole zu tanken, kann dies durch den Druck auf die nicht entriegelte untere Abdeckklappe eine Beschädigung dieser Dichtklappe verursachen.

Weiter nachteilig bei dieser Ausgestaltung ist, dass durch ein verkantetes, schräges Ansetzen der Zapfpistole ebenfalls eine Entriegelung erfolgen kann, obwohl der Durchmesser des Rohres der Zapfpistole eigentlich zu klein ist. Ferner ist der Eingriff der unteren Abdeckplatte in der Nut des Verschiebeelementes vergleichsweise störanfällig, da etwa durch Verschmutzungen oder durch Verschleiß in Folge des regelmäßig auftretenden seitlichen Abgleiten des Rohres in dem Verschiebeelement diese Nut beschädigt oder außer Eingriff geraten kann. In diesem Fall ist aber die Funktion der Sicherheit aufgehoben, so dass auch mit kleineren Rohrdurchmessern die untere Abdeckung nach unten geklappt werden kann.

Ein weiterer Nachteil dieser Ausgestaltung besteht darin, dass die Sicherung erlaubt, dass auch der Rüssel einer ungeeigneten Zapfpistole vergleichsweise tief eingeschoben werden kann, bevor der Fahrer feststellen kann, dass die Zapfpistole eigentlich nicht in den Stutzen passt. Viele Benutzer werden dies aber nicht realisieren sondern stattdessen entweder denken, bei der Ausgestaltung wäre es normal, dass der Rohrabschnitt der Zapfpistole nicht ganz versenkt werden kann oder von einem defekten Stutzen ausgehen. Dies kann dazu führen, dass diese Benutzer entweder mit Gewalt weiter drücken oder mit der Betankung beginnen, was dann wiederum dazu führt, dass das Benzin in den Bereich zwischen den oberen Rand des Stutzenabschlusses und der unteren Abdeckung einläuft und dort entweder durch die gesetzlich vorgeschriebene Rückführung in den Tank doch in den Kraftstoffvorrat gelangt oder in den Ausgleichsbehälter läuft. Beides ist aber in der Praxis aus verständlichen Gründen nicht erwünscht.

Die WO 2006/084908 beschreibt einen Stutzenabschluss mit zwei Schwenkklappen als deckellosem Verschluss, wobei hier die obere Schwenkklappe zur Sicherung gegen Befüllen mit ungeeignetem Kraftstoff ausgebildet ist und die eigentliche Dichtung des Tanks durch die untere Schwenkklappe gebildet wird.

Obwohl diese Lösung eine sichere Dichtung und einen hinreichenden Schutz vor Fehlbetankungen bietet, hat sie, wie auch die anderen oben beschriebenen Lösungen den Nachteil, dass der verdickte Endbereich des Rohrstutzens, der den deckellosen Mechanismus aufnehmen muss, relativ lang sein muss, um die mechanischen Funktionselemente unterbringen zu können. Dies wiederum führt zu einem größeren Raumbedarf für den Rohrstutzen, der je nach Fahrzeugdesign und insbesondere bei späterem Umstieg von einem konventionellen auf einen deckellosen Stutzen bei ansonsten nicht geändertem Fahrzeugdesign aber nicht immer zur Verfügung steht.

Ein weiterer Nachteil des Standes der Technik ist die Tatsache, dass die deckellosen Stutzen nicht hinreichend sicher gegen das Einführen eines Abpumpschlauches in Diebstahlabsicht sind. Dies wird meist über externe Abdeckklappen gelöst, wobei auch deren Verriegelung üblicherweise vergleichsweise leicht aufgehebelt werden können.

### Darstellung der Erfindung

Aufgabe der Erfindung ist es daher, einen selbsttätig verschließenden und durch den Druck eines Ausgaberohres zu öffnenden Stutzenabschluss der eingangs genannten Art zu schaffen, der hinsichtlich des Raumbedarfs und bei einer weiteren Ausgestaltung zusätzlich hinsichtlich des Diebstahlschutzes optimiert ist.

Diese Aufgabe wird hinsichtlich des Raumbedarfes durch einen Stutzenabschluss gelöst, der dadurch gekennzeichnet ist, dass die untere Dichtklappe derart angeordnet ist, dass sie im geschlossenen Zustand nicht nur in einem Winkel zu der rechtwinklig zur Stutzenachse (S) angeordneten Querschnittsebene angeordnet ist sondern dass und der Anlenkpunkt der unteren Dichtklappe oberhalb des unteren Endes der ersten Kreissegmentbahn angeordnet ist.

Hinsichtlich des Diebstahlschutzes wird diese Aufgabe dadurch gelöst, dass zusätzlich als Abpump- und Diebstahlschutz unterhalb der unteren Dichtklappe ein von einer mechanischen Einführsperre gebildetes, flüssigkeitsdurchlässiges Diebstahlschutzmittel zum Schutz vor dem Einführen eines Rohres oder Schlauches vorgesehen ist, was insbesondere durch einen Teil des Raumgewinns, der infolge der Lösung des Raumes erzielt werden kann, möglich wird.

Bei den gattungsgemäßen Stutzenabschlüssen wird durch den eingeschobenen "Russel", also das Ausgaberohr der Zapfpistole im Falle eines Kraftstofftanks, zunächst die obere Schwenkklappe geöffnet. Bei weiter eindringendem Ausgaberohr wird dann die untere Dichtklappe aufgestoßen und der Betankungsvorgang kann beginnen, da nun der Kraftstoff nach unten, in den Tank abfließen kann und nicht die Sicherungssperre der Zapfpistole aktiviert. Dies wäre vor dem Aufstoßen der unteren Dichtklappe der Fall, da sich dann Kraftstoff in dem Raum zwischen den beiden Klappen ansammelt und einen bereits gefüllten Tank simuliert.

Die Erfindung verlagert die untere Dichtklappe nun nach oben, in Richtung der oberen Schwenkklappe. Damit diese, da sie sich ja zuerst öffnet und nach unten schwenkt, ohne Kollision mit der unteren Dichtklappe geöffnet werden kann, ist die untere Dichtklappe schräg gestellt, so dass sie außerhalb der Bewegungslinie der oberen Schwenkklappe liegt. Zusätzlich kann sie gebogen sein, so dass eine noch bessere Raumausnutzung in Stutzenlängsrichtung möglich ist, in diesem Fall kann es jedoch je nach Klappengröße und Stutzendurchmesser erforderlich sein, die Seitenwandung des Rohrstutzens etwas auszuwölben.

Durch die hoch gesetzte untere Dichtklappe verbleibt nach wie vor genügend Raum, um Ausschaltfunktion der Zapfpistole bei nicht tief genug eingeführten Ausgaberohr zu aktivieren. Andererseits kann der unterhalb der unteren Dichtklappe gewonnene Raum genutzt werden, um entweder die Baugröße der Stutzeneinheit zu verringern oder bzw. und eventuell zusätzlich einen Diebstahlschutz vorzusehen.

Da die Doppelklappenstutzen in der Regel den herkömmlichen (abschließbaren) Tankdeckel ersetzen, ist der übliche Diebstahlschutz nicht weiter verfügbar. Hier kann zwar vor dem Stutzenabschluss eine, beispielsweise über die Zentralverriegelung des Kraftwagens, verschließbare Klappe vorgesehen werden, diese hat aber den Nachteil, dass sie relativ leicht aufgehebelt werden kann und muss darüber hinaus dann auch vorhanden sein.

Ein zweiter Aspekt der Erfindung ist das der verbesserte Schutz gegen Abpumpen bzw. Absaugen des Behälterinhaltes. Dies wird erfindungsgemäß durch eine mechanische Sperre erreicht, die unterhalb der unteren Dichtklappe angeordnet ist. Dieses Diebstahlschutzmittel ist flüssigkeitsdurchlässig, so dass es die Betankung nicht stört. Es verhindert aber, dass Rohre oder Schläuche so tief in den Tank eingeschoben werden können, dass die in den Flüssigkeitspegel eintauchen und ein Ansaugen von Flüssigkeit ermöglichen.

Weitere Merkmale und Vorteile der Erfindung ergeben sich aus den Unteransprüchen und aus der nachfolgenden Beschreibung bevorzugter Ausführungsbeispiele der Erfindung anhand der Zeichnungen.

### Kurze Beschreibung der Zeichnungen

In den Zeichnungen zeigt:

Figur 1 eine schematische Seitenansicht auf einen erfindungsgemäßen Stutzenabschluss,

Figur 2 den Stutzenabschluss aus Figur 1 mit eingeschobenen Einfüllrohr

Figur 3 eine weitere Ausgestaltung eines Stutzenabschlusses in einer Seitenansicht mit einem oberen Sicherungsmechanismus gegen Fehlbetankungen,

Figur 4 einen Stutzenabschluss mit einer Diebstahlschutzmittel und einer Sollbruchstelle in einer Seitenansicht im Schnitt,

Figur 5 eine schematische Ansicht einer Doppelklappenanordnung,

Figur 6 eine schematische Ansicht einer weiteren Doppelklappenanordnung,

Figur 7 eine schematische Ansicht einer dritten Doppelklappenanordnung,

Figur 8 eine Draufsicht auf ein siebförmiges Diebstahlschutzmittel im unteren Rohrstutzen,

Figur 9 eine weitere Variante des Diebstahlschutzmittels mit seitlicher Schlauchausleitung,

Figur 10 eine dritte Variante des Diebstahlschutzmittels und

Figur 11 eine vierte Variante des Diebstahlschutzmittels. Die Figuren 2, 4, 7 und 9-11 betreffen weitere Ausgestallungen, die nicht erfinderungsgemäß sind

### Bester Weg zur Ausführung der Erfindung

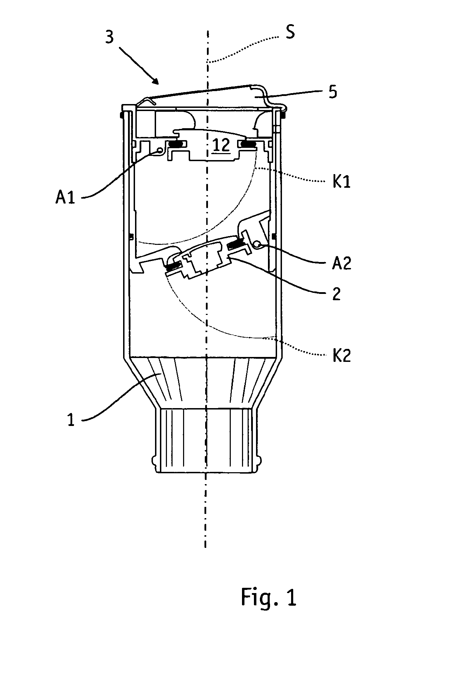

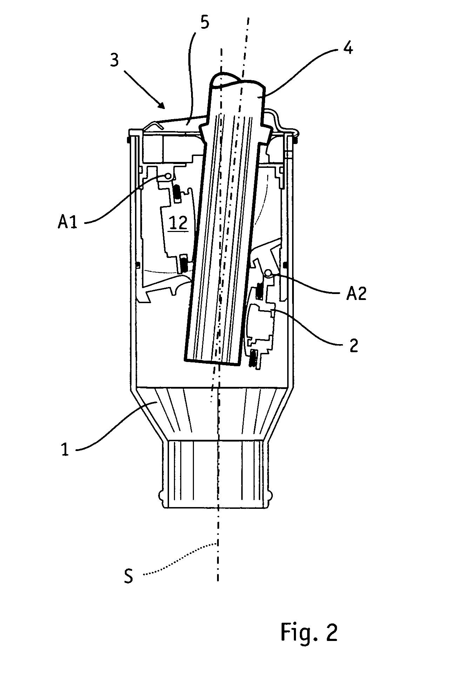

Die Figuren 1 und 2 zeigen einen erfindungsgemäßen Stutzenabschluss für den Einfüllstutzen eines Behälters. Ein solcher Behälter kann, wie im dargestellten Ausführungsbeispiel, der Tank eines Kraftfahrzeuges sein. Dieser Behälter weist einen Doppelklappenverschluss auf, der von der oberen Schwenkklappe 12 und der unteren Dichtklappe 2 gebildet ist. Im Bereich der Klappen ist der Stutzeneinsatz im Vergleich zum unteren Abschnitt des Einfüllstutzens 1 im Durchmesser erweitert, um die Verschlussmechanik aufnehmen zu können und um das Einfüllrohr 4 einer Zapfpistole, wie in Figur 2 dargestellt, einführen zu können. Der Einfüllstutzen 1 erstreckt sich lang einer geradlinigen oder gebogenen Stutzenachse S und leitet den eingefüllten Kraftstoff in den Tank eines Kraftfahrzeuges.

Wie im dargestellten Ausführungsbeispiel kann der Stutzenabschluss zweiteilig ausgebildet sein, wobei ein inneres, die Verschlussmechanik tragendes Einsteckrohr in ein äußeres Halterohr des Einfüllstutzens 1 eingesteckt ist. Zwischen beiden Bauteilen angeordnete Dichtungen tragen dafür Sorge, dass eine gas- und flüssigkeitsdichte Verbindung realisiert ist. Die Verbindung kann darüber hinaus über lösbare Steck- oder Klipsverbindungen gegen unbeabsichtigtes Herausziehen gesichert sein, etwa wenn der Benutzer beim Herausziehen der Zapfpistole eine Querkraft auf dem Stutzeneinsatz ausübt und gleichzeitig an der Pistole zieht. Die Verbindung kann zum Austauschen des Einsatzes lösbar ausgebildet sein, bevorzugt in einer Weise, dass sie nur von einem Fachpersonal über ein Spezialwerkzeug gelöst werden kann. Eine derartige Verbindung kann beispielsweise von federnden Rastelementen gebildet sein, die an der Unterseite des Stutzeneinsatzes greifbar sind, so dass sie nach innen zurückgezogen werden können. Hierzu kann ein Spezialwerkzeug durch den Einführkanal der Zapfpistole 4 in den Stutzen eingeführt werden, das Kreiselemente aufweist, die die federnden Rastnasen greifen und nach innen ziehen können. Alternativ kann der Stutzeneinsatz auch über eine Schraub- oder Bajonettverbindung in das äußere Rohr eingeschraubt sein.

Der die Verschlussmechanik tragende Einsatz mit dem inneren Halterohr ist bevorzugt aus Kunststoff gefertigt. Der äußere Bereich des Einfüllstutzens 1 kann ebenfalls Kunststoff oder auch aus einem Blechmaterial gefertigt sein, je nach Anforderung an den Einfüllstützen 1 bzw. an dessen oberen Bereich. Die in den Figuren 1 und 2 gezeigte Ausgestaltung weist am unteren Ende eine Verbindungsmöglichkeit mit dem Rohr eines Einfüllstutzens 1 auf. Hier ist also der Stutzenabschluss nochmals als separates Bauteil ausgebildet, so dass dieser mit dem Rohr des Einfüllstutzens verbindbar ist, auch diese Verbindung kann über entsprechende Maßnahmen gesichert sein. Der Vorteil dieser zweiteiligen Ausgestaltung besteht darin, dass im Wartungsfall, etwa wenn die Verschlussklappenmechanik ausfallen sollte, der gesamte Stutzenaufsatz abgenommen werden kann, so dass er als separates Ersatzteil angeboten und verbaut werden kann. Darüber hinaus kann natürlich der Stutzenabschluss aus einem anderen Material gefertigt werden als der untere Abschnitt des Einfüllstutzens.

Die erfindungsgemäßen Stutzenabschlüsse werden nicht nur bei völligen Neukonstruktionen, sondern auch im Rahmen der Modellpflege eines Kraftfahrzeuges eingesetzt. In beiden Fällen besteht häufig das Problem, dass aufgrund des geforderten Designs oder sonstigen Gründen nicht genügend Bauraum zur Verfügung steht, um einen beliebig großen Stutzenabschluss verbauen zu können. Andererseits ist der Schwenkbereich der die obere Einfüllöffnung 5 verschließenden oberen Verschlussklappe 12 fest vorgegeben, da der dem Anlenkpunkt 1 gegenüberliegende Rand der Verschlussklappe 12 längs einer ersten Kreissegmentbahn K1 bewegt ist. Aus Sicherheitsgründen ist es notwendig, dass die Verschlussklappen, also die obere Verschlussklappe 12 und die untere Dichtklappe 2, unabhängig voneinander bewegt sind, und sich also nicht gegenseitig beeinflussen. Dies wäre zum Beispiel dann der Fall, wenn die obere Verschlussklappe 12 im Rahmen der Aufschwenkbewegung gegen die untere Dichtklappe 2 drücken würde und diese damit selbsttätig öffnen könnte.

Die bekannten Stutzenabschlüsse weisen aus den oben genanten Gründen einen Abstand zwischen der oberen Verschlussklappe 12 und der unteren Dichtklappe 2 auf, der zumindest dem Radius der Kreissegmentbahn K1 entspricht. Dies führt zu einem vorgegebenen Bauraum, da auch unterhalb der unteren Dichtklappe 2, deren freies Ende längs der Kreissegmentbahn K2 bewegt ist, ein entsprechender Schwenkradius im Inneren des Stutzenabschlusses zur Verfügung stehen muss.

Erfindungsgemäß soll nun der benötigte Bauraum verringert werden. Hierzu ist der Anlenkpunkt A2 der unteren Dichtklappe 2 innerhalb des Stutzenabschlusses nach oben versetzt. Um eine Kollision der noch geschlossenen, unteren Dichtklappe 2 mit der sich öffnenden, oberen Schwenkklappe 12 bei Einschieben einer Zapfpistole 4 zu vermeiden, ist die untere Dichtklappe 2 nun nicht mehr waagerecht, sondern nach unten abgewinkelt angeordnet, so dass sie außerhalb der Bewegungsbereichs der oberen Schwenkklappe 12 bleibt. Ein optimales Ergebnis wird erzielt, wenn sich die Mechanik der unteren Dichtklappe 2 im wesentlichen tangential an den Schwenkradius der oberen Schwenkklappe anschmiegt, wobei natürlich ein gewisser Abstand verbleiben sollte, um eine Beruhrung der Klappen zu vermeiden. Sofern, wie im gezeigten Ausführungsbeispiel, der Verbund aus der Dichtklappe 2, deren Anlenkung A2 sowie der gegenüberliegende Widerlageranschlag im mittleren Bereich etwas tiefer ausgebildet ist, weil wie hier zum Beispiel die Dichtklappe relativ zum Anschlag und dem Widerlageranschlag nach unten versetzt ist, kann der Anschlag der Widerlagerklappe auch noch höher gesetzt werden, so dass sich ein zusätzlicher Raumgewinn ergibt.

Wesentlich für die Erfindung ist die Tatsache, dass durch die Schrägstellung der unteren Dichtklappe 2 die nach oben gerichtete Kontur des Verbundes so angeordnet ist, dass sie außerhalb der Bewegungslinie des äußersten Bereiches der oberen Schwenkklappe 12 liegt, aber insgesamt möglichst hoch angeordnet ist.

Der Raumgewinn im Bereich des oberen Stutzenabschlusses ergibt sich nicht nur durch die Tatsache, dass der Anschlagpunkt A2 der unteren Dichtklappe 2 nach oben versetzt ist, sondern auch dadurch, dass die Kreissegmentbahn K2, längs derer der äußere, freie Rand der unteren Dichtklappe 2 bewegt ist, kein Viertelkreis mehr ist sondern nur ein Bruchteil des ehemaligen Viertelkreises, der um den Winkel der Schrägstellung im Vergleich zum Viertelkreis reduziert ist. Die erzielbare Verkürzung des oberen Abschnittes des Einfüllstutzens wird somit im Wesentlichen von der Länge der eingesparten Wegstrecke des unteren Kreissegmentes K2 im Vergleich zum Viertelkreis bestimmt. Auch wenn diese Einsparung auf den ersten Blick relativ gering erscheint, führt es jedoch dazu, dass die Gestaltungsfreiheit des KFZ-Designers und die Umrüstbarkeit bereits bekannter Kraftfahrzeuge auf den erfindungsgemäßen Stutzenabschluss wesentlich erhöht werden.

Im gezeigten Ausführungsbeispiel mit einander gegenüberliegenden Anlenkpunkte A1 und A2 tritt der erfindungsgemäße Vorteil natürlich nur dann ein, wenn die untere Verschlussklappe 2 und die obere Schwenkklappe 12 gegensinnig öffnen, da ansonsten ja die Kreissegmentbahn K2 im Vergleich zum waagerechten Einbau sogar noch verlängert würde.

Eine weitere, hier nicht dargestellte Ausgestaltung eines Stutzenabschlusses weist eine untere Dichtklappe 2 auf, die aus Sicht der oberen Einfüllöffnung 5 konkav ausgebildet ist. Diese konkave Ausbildung führt dazu, dass der in den Figuren 1 und 2 dargestellte mittlere Einsenkungsbereich auch ohne den Versatz der unteren Dichtklappe 2 relativ zum Anlenkpunkt A2 und dem gegenüberliegenden Widerlager realisiert ist, so dass der zur Verfügung stehende Bauraum in gleicher Weise optimierbar ist. Da die oberen Schwenkklappe 12, wie auch der Stutzenabschluss selbst, im Querschnitt rund ausgebildet ist, ist eine zentrale mittige Einsenkung der unteren Dichtklappe 12 ausreichend, um diesen Effekt zu erzielen.

Die untere Dichtklappe 2 kann so innerhalb des Stutzenabschlusses angeordnet sein, dass sie mit dem vorderen, dem Anlenkpunkt A2 gegenüberliegenden Bereich in den engeren Bereich des unteren Einfüllstutzens 1 verschwenkbar ist. Dieser Bereich kann dann rund ausgebildet sein, so dass aufgrund des größeren Durchmessers der unteren Dichtklappe 2 relativ zum Einfüllstutzen 1 diese Verschlussklappe nur um einen gewissen Winkelgrad öffenbar ist, der natürlich ausreichend groß sein muss, um die erforderliche Menge an Kraftstoff durchzulassen. Bevorzugt wird allerdings sein, dass die untere Dichtklappe 2 soweit aufschwenkbar ist, dass die Zapfpistole mit ihrem Einfüllrohr 4 vollständig durch diese hindurchsteckbar ist. Dies hat den Vorteil, dass eine eindeutige Einfüllposition vorliegt, die nach dem Einstecken um mehrere Zentimeter erreicht wird, so dass für den Benutzer ein sicheres Gefühl beim Einführen des Einfüllrohres 4 in den deckellosen Verschlussmechanismus entsteht.

Bevorzugt ist der Stutzenabschluss selbst und auch, sofern er relativ zum sonstigen Einfüllstutzen 1 als zusätzliches Bauteil ausgebildet ist, so ausgebildet, dass er nur in einer eindeutigen Orientierung aufsteckbar ist. Dies kann beispielsweise dadurch realisiert werden, dass zwischen dem inneren, dem die Verschlussklappen haltenden Einsteckrohr und dem äußeren Halterohr des in Figur 1 dargestellten, zweiteiligen oberen Stutzenabschlusses, Nutfederverbindungen vorgesehen werden, so dass der innere Teil des Stutzenabschlusses nur in einer, in Drehrichtung eindeutigen Orientierung einsetzbar ist.

Ein weiteres besonders bevorzugtes Merkmal einer der oben beschriebenen Nutfederverbindung kann darin bestehen, dass die Zugehörigkeit des inneren Bereiches zum äußeren Bereich festlegbar ist. Eine solche Vorkehrung ist zum Beispiel dann zweckmäßig, wenn innerhalb einer Fahrzeugreihe eines Herstellers verschiedene innere Einsätze verwendet werden, so dass die Gefahr bestehen könnte, im Montage- oder Ersatzfall ein nicht passendes Einsatzelement verwendet wird. Ferner können zum Beispiel zur Vermeidung von Fehlbetankungen die Durchmesser der oberen Einfüllöffnung und auch der Verschlussklappen, also der oberen Schwenkklappe 12 und der unteren Dichtklappe 2, für Benzinfahrzeuge so klein gehalten sein, dass sie nicht mit einem Dieseleinfüllrohr 4 betankbar sind. Sofern eine Fehlbetankung über eine solche Durchmessereinengung vermieden werden soll ist es natürlich zweckmäßig, dass im Ersatzteil nicht das falsche Bauteil an den Stutzenabschluss eingesetzt werden kann. Hier kann über den Abstand der Nuten und Federn bei Verwendung mehrerer Nutfederverbindungen ein Schlüsselsystem geschaffen werden, so dass beinahe beliebig viele Codierungen möglich sind, über die festgelegt werden kann, dass nur der passende Einsatz in das äußere Einsatzrohr eingesetzt werden kann.

Auf gleiche Weise kann im unteren Bereich bei einem zweiteilig ausgebildeten Einfüllstutzen, also einem oberen, die Mechanik haltenden Stutzenabschluss und einem unteren Einfüllrohr eine entsprechende Codierung vorgesehen werden. Sofern eine Fehlbetankung, wie nachfolgend beschrieben, anderweitig ausgeschlossen werden kann, kann eine entsprechende Codierung und Verschlüsselung auch dadurch realisiert werden, dass der Stutzenaufsatz im unteren Bereich, also im Ansatzbereich zum unteren Einfüllstutzen 1 nicht kreisrund sondern im Querschnitt oval ausgebildet ist. Verbindungsbereich des unteren Rohrstutzens muss dann natürlich ebenfalls mit gleicher Querschnittsgeometrie oval ausgebildet werden, so dass die beiden Bauteile ineinander gesteckt werden können. Über die Wahl des elliptischen Querschnittes kann dann ebenfalls eine Orientierung der Einbauposition festgelegt werden und eine Verschlüsselung, also eine Eindeutigkeit beim Zusammenbau, realisiert werden.

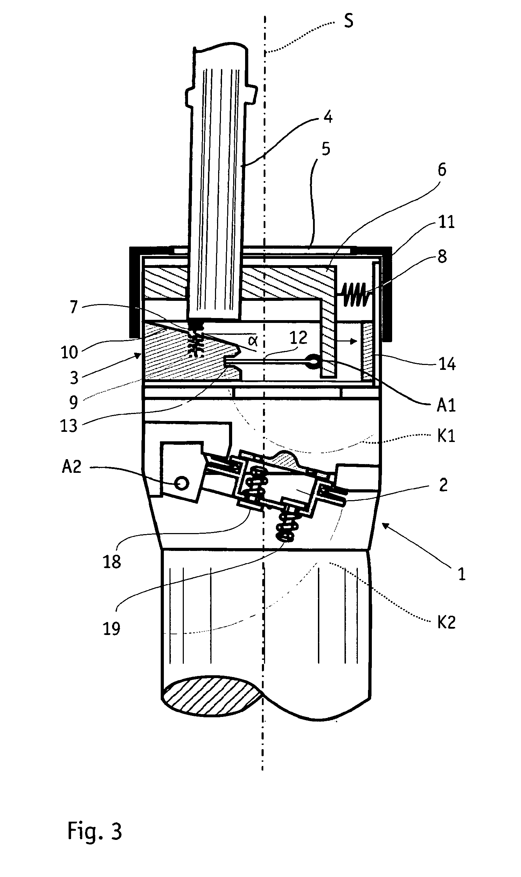

In Figur 3 ist eine weitere Ausgestaltung eines Stutzenabschlusses dargestellt, die ebenfalls zueinander Anlenkpunkte der oberen Schwenkklappe 12 und der unteren Dichtklappe 2 aufweist. Bei dieser schematischen Ausgestaltung ist der obere Verschlussmechanismus derart ausgebildet, dass er zum einen ersten Diebstahlschutz bietet und zum anderen eine Sicherung vor Fehlbetankungen beinhaltet. Der Verschlussmechanismus wird im nachfolgenden detaillierter beschrieben.

Der Stutzenabschluss wird hier ebenfalls von einem Rohrstück 1a gebildet, das im oberen Bereich über einen deckellosen Verschlussmechanismus 3 verschlossen ist. Unterhalb dieses die obere Schwenklappe 12 enthaltenden Verschlussmechanismus 3 ist die untere Dichtklappe 2 vorgesehen, die den Stutzen abdichtet. Hierzu ist die Dichtklappe über eine Feder gegen eine Dichtfläche (hier nicht dargestellt) angestellt. Weiter weist der Stutzenabschluss Über- und Unterdruckventile sowie einen hier nicht dargestellten Wasserablauf auf, über den eindringendes Wasser nach außen abgeleitet werden kann.

Im oberen Bereich ist eine obere Einfüllöffnung 5 vorgesehen, durch die das Ausgaberohr 4 der Zapfpistole in den Stutzen 1 eingeführt werden kann. Bei weiterem Eindringen des Ausgaberohrs 4 wird wie nachfolgend beschriebene der Verschlussmechanismus 3 überwunden, dann zunächst die Schwenkklappe 12 und schließlich die untere Dichtklappe 2 geöffnet. Der Verschlussmechanismus 3 verhindert eine Öffnung des Rohrstutzens ohne das Einführen einer Zapfpistole.

Um Fehlbetankungen auszuschließen oder möglichst zu vermeiden soll der Verschlussmechanismus 3 nur dann geöffnet werden können, wenn eine Zapfpistole zum Einfüllen eines geeigneten Treibstoffs angesetzt wird. Hierzu ist in den oberen Stutzenabschnitt des Rohrstücks 1 ein Ringelement 14 eingesetzt, in dem wiederum ein Schiebeelement rechtwinklig zur Stutzenachse verschiebbar geführt ist. Das Schiebeelement weist eine U-förmige Form auf, wobei es ebenso auch als rundum geschlossenes Element ausgebildet sein könnte. Wesentlich ist lediglich hier, dass es einen Durchlass aufweist, durch den das Ausgaberohr 4 hindurch gesteckt werden kann.

Durch das durchgesteckte Ausgaberohr 4 werden nun Verriegelungsmittel 7 niedergedrückt, die mit oberen Bereichen formschlüssig in Ausnehmungen in dem Schiebeelement eingreifen. Durch das Niederdrücken geraten nun die Verriegelungsmittel 7 außer Eingriff, das Schiebeelement wird so freigegeben und kann dann in seitliche Richtung (vgl. Pfeilrichtung) verschoben werden.

Unterhalb des Schiebeelementes ist eine schiefe Ebene als Abgleitfläche 10 ausgebildet, die in die innere Mantelfläche des Ringelementes 14 eingearbeitet ist. Diese Abgleitfläche 10 ist um einen Winkel α relativ zur Stutzenachse des Rohrstücks 1 geneigt und bewirkt einen seitlichen Versatz des durch das Schiebeelement eingesteckten Ausgaberohrs 10, wenn dieses weiter in den Rohrstutzen 1 eingeführt wird.

Durch den seitlichen Versatz wird das Ausgaberohr 4 nun gegen das Schiebeelement gedrückt, was wiederum ein seitliches Wegschieben des Schiebeelements bewirkt, bis der Bereich oberhalb der oberen Einfüllöffnung vollständig für das Einschieben der Zapfpistole freigegeben ist. Diese Entriegelung und das nachfolgende Verschieben des Schiebeelementes sind jedoch nur dann möglich, wenn die beiden gegenüberliegenden Verriegelungsmittel 7 durch den unteren Rand der Zapfpistole niedergedrückt werden. Ist diese nicht groß genug, weil der Durchmesser des Ausgaberohres 10 zu klein ist, kann entweder kein oder nur ein Verriegelungsmittel 7 niedergedrückt werden, was die Verriegelung aber nicht aufhebt.

Bevorzugt ist, wie hier gezeigt, der Verschlussmechanismus über eine Abdeckkappe 11 geschützt, die ein Langloch zum Einstecken des Ausgaberohrs 4 aufweist, wobei die Breite des Langlochs etwas größer als der Durchmesser des Ausgaberohrs 4 ist und die Länge des Langlochs im Wesentlichen dem Verschiebeweg des Schiebeelementes entspricht. Alternativ kann auch ein üblicher Deckel verwendet werden, der über eine Schraub- oder Bajonettverbindung mit dem Stutzenabschluss verbunden sein kann.

Unterhalb der oberen Einfüllöffnung 5 ist die erste, obere Schwenkklappe 12 vorgesehen, die um einen ersten Anlenkpunkt A2 schwenkbar ist und neben einem Schutz vor groben Schmutz einen Diebstahlschutz und eine erste Abdichtung bewirkt. Hierzu ist sie gelenkig an dem Schiebeelement angeordnet und wird mit diesem verschoben. An der gegenüberliegenden Seite greift sie in eine Eingriffsnut 13 ein, die die zusätzliche Verschlussklappe 12 im geschlossenen Zustand festlegt. Eine Rückstellfeder stellt nach Abziehen der Zapfpistole die Klappe 12 wieder zurück, damit diese dann bei Zurückgleiten des Schiebeelementes wieder in die Eingriffsnut 13 eingreifen kann.

Die um den Anlenkpunkt A2 nach unten schwenkbare untere Dichtklappe 2 besteht hier aus einer an einem Schwenklager 15 angeordneten Schwenkklappe, die durch die Kraft einer Verschlussfeder gegen einen Lagerrand im Rohrstutzen 1 des Einfüllstutzens unter Einschluss einer Dichtung 16 gedrückt wird. Im oberen Teil weist die Dichtklappe 2 einen Druckbereich auf, gegen den sich der untere Rand der Zapfpistole abstützen kann. Im unteren Bereich ist die Dichtklappe 2 mit einem Überdruckbypass 19 und einem Unterdruckbypass 18 versehen, über die Unter- bzw. Überdrücke kompensiert werden können. Hierfür können alle Arten von Druckventilen verwendet werden.

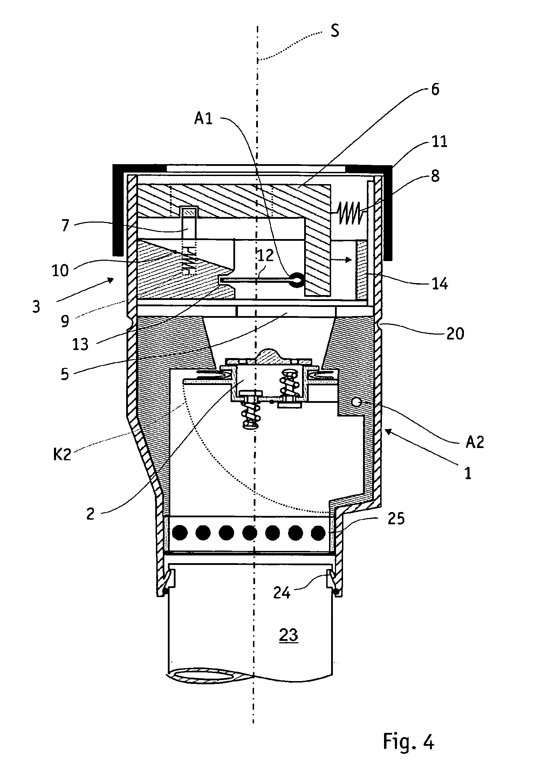

In Figur 4 ist eine weitere Ausgestaltung eines Stutzenabschlusses mit einem weiteren, von den zuvor beschriebenen Aspekten unabhängigen Aspekt der Erfindung dargestellt. Hier ist die untere Dichtklappe 2 gerade ausgebildet, darunter sind jedoch Diebstahlschutzmittel 25 vorgesehen.

Der Stutzenabschluss selbst ist mit einer Sollbruchstelle 20 versehen, die von einer von außen in die Stutzenwandung eingeprägten, nutartigen Vertiefung gebildet ist, so dass sich hier eine Materialschwächung ergibt. Diese Sollbruchstelle 20 hat den Sinn, dass bei Auftreten einer unzulässigen Querkraft der obere Bereich des Stutzenabschlusses unter Aufrechterhaltung der Dichtwirkung der unteren Dichtklappe 2 abbrechen kann und so trotz einer unzulässig hohen Querkraft die Dichtwirkung des Einfüllstutzens im Wesentlichen aufrechterhalten bleibt.

Zur Verbindung mit dem Rohrstutzen 23 wird der hier dargestellte Stutzenabschluss auf den Rohrstutzen 23 aufgeschoben, wobei federnde Haltezungen in Ausnehmungen des Rohrstutzens 23 derart einrasten, dass ein Abziehen nur unter Zerstörung von den federnden Haltezungen 24 oder durch Einführen des Werkzeugs möglich ist. Die eingerasteten federnden Haltezungen hintergreifen zur formschlüssigen Verbindung mit den Enden Haltekanten 24 des Rohrstutzens 23, so dass der Stutzenabschluss fest gehalten ist. Eine (hier nicht dargestellte) Dichtung dichtet die Verbindung ab.

Ein weiterer wesentlicher Aspekt der vorliegenden Erfindung, ist in Figur 4 dargestellt. Hierbei handelt es sich um einen Diebstahlschutz 25, der unterhalb der unteren Dichtklappe 2 angeordnet ist. Dieser Diebstahlschutz 25 kann auch in Verbindung mit den herkömmlichen Stutzenabschlüssen, die beispielsweise in der Beschreibungseinleitung genannt sind, unabhängig von dem zuvor beschriebenen Merkmalen Verwendung finden. Der Anmelder behält sich ausdrücklich vor, diesen nachfolgend beschriebenen Komplex als selbstständige Erfindung, eventuell auch im Rahmen einer Teilanmeldung, zu beanspruchen.

Bei den erfindungsgemäßen, meist deckellosen Verschlussmechanismen der gattungsgemäßen Art besteht grundsätzlich die Möglichkeit, durch die Doppelklappenabdeckung in Diebstahlabsicht einen Schlauch oder ein Rohr einzuführen, um den Inhalt des Tankes abzupumpen. Die gattungsgemäßen Stutzenabschlüsse werden meist ohne zusätzlichen oberen Verschlussdeckel, der über eine Bajonett- oder Schraubverbindung auf den Stutzenabschluss aufgeschraubt sein könnte, verwendet, um eine besonders leichte Betankung ohne Verlustrisiko für einen solchen Deckel zu ermöglichen. Häufig wird ein solcher deckelloser Verschluss dann über eine äußere Schwenkklappe in der Fahrzeugkarosserie abgedeckt, die über die Zentralverriegelung verriegelbar ist. Hier besteht einerseits die Gefahr, dass bei nicht ganz verschlossener Schwenkklappe die Zentralverriegelung zwar aktiviert wird, aber die entsprechende Öse nicht zu greifen vermag, so dass trotz des ausgefahrenen Veiriegelungsdorns der Zentralverriegelung die karosserieseitige Schwenkklappe nicht verschlossen ist.

Sofern kein abschließbarer Deckel an dem Einfüllstutzen vorhanden ist, könnte ein Dritter einen Schlauch durch die Verschlussklappen in den Einfüllstutzen 1 einführen und Kraftstoff abpumpen. Hierzu ist Voraussetzung, dass dieser Schlauch so tief in den Einfüllstutzen 1 eingeführt werden kann, dass er mit der abzupumpenden Flüssigkeit in Kontakt kommt und ausreichend tief hierin eintauchen kann. Um den gesamten Behälterinhalt abzupumpen, müsste der Schlauch also durch den Einfüllstutzen 1 in den Kraftstoffbehälter hineingeführt werden.

Andererseits kann im Falle einer Fehlbetankung oder auch bei einem Austausch des Kraftstoffbehälters bzw. einer sonstigen Wartungsarbeit am Kraftstoffversorgungssystem, durchaus gewünscht sein, den Kraftstoffbehälter abpumpen zu können. Obwohl natürlich auch auf der Entnahmeseite des Kraftstoffbehälters eine entsprechende Ansatzmöglichkeit für eine Pumpfunktion gegeben wäre, kann es trotzdem gewünscht sein, die Abpumpbarkeit trotz eines Diebstahlschutzes über den Einfüllstutzen zu erhalten. Durch die vorliegende Erfindung können nun verschiedene Aspekte je nach Wunsch des Gestalters realisiert werden.

Bei dem in Figur 4 dargestellten Ausführungsbeispiel wird der Diebstahlschutz von Diebstahlschutzmitteln 25 gebildet, die hier in Form von quer zur Zeichnungsebene verlaufenden Einführsperren gebildet sind. Diese Einführsperren sind von einzelnen Streben gebildet, wobei die Anzahl und die Menge der Streben so gewählt werden sollte, dass ein üblicher Schlauch nicht hindurchsteckbar ist, andererseits aber das Abfließen des eingefüllten Kraftstoffes möglich ist. Neben den hier dargestellten, parallel zueinander angeordneten Einzelstreben kann auch ein labyrinthartiger Einlaufkanal, ein Sieb oder jedes andere Bauelement Verwendung finden, das eine Flüssigkeit durchlässt, für einen Schlauch oder ein Rohr aber undurchlässig ist. Ein labyrinthartiger Einlaufkanal kann zum Beispiel einen mehrfach gewundenen Strömungskanal aufweisen, so dass ein Schlauch gar nicht oder nur unter Schwierigkeiten einführbar ist. In diesem Fall kann eine entsprechende Enge des Kanals die Durchlässigkeit für den Kraftstoff erlauben, während der Durchlass für einen Schlauch blockiert ist.

Insbesondere bei Fahrzeugen, die mit Dieselkraftstoff betankt werden sollen, kann über ein Labyrinth oder einen grobmaschigeres, aber stabileres Gitter als Diebstahlschutzmittel 25 dafür Sorge getragen werden, dass der eingefüllte Kraftstoff nicht zusätzlich übermäßig aufschäumt, so dass ein Rückschäumen des Kraftstoffes, also eine Entwicklung einer Schaumfront in Richtung der Einfüllöffnung 5, vermieden werden kann.

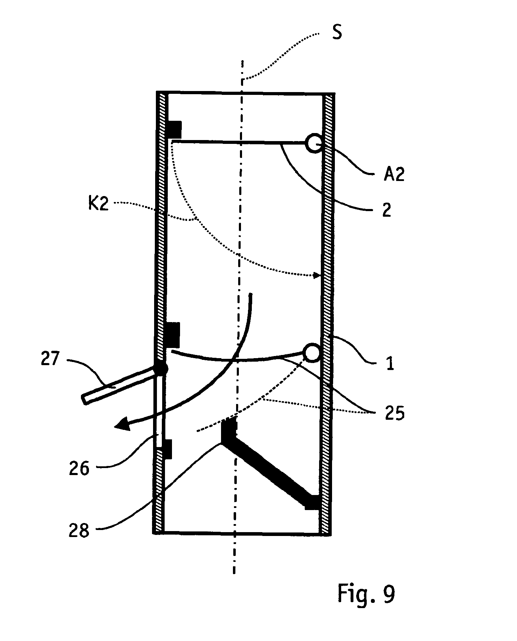

Eine weitere Diebstahlschutzmaßnahme sieht vor, dass in der äußeren Seitenwandung des Einfüllstutzens eine seitliche Öffnung 26 (hier nicht dargestellt) vorgesehen ist, die über einer Sicherheitsklappe 27 (hier nicht dargestellt) vorgesehen ist. Durch diese seitliche Öffnung kann ein eindringender Schlauch über das Diebstahlschutzmittel 25 nach außen geführt werden, so dass der Dieb den Eindruck hat, er hätte den Schlauch in den Einfüllstutzen 1 eingeführt. Stattdessen führt er ihn jedoch längs des Stutzens an dessen Außenseite ein, so dass er den Flüssigkeitspegel des Kraftstoffes nicht erreichen kann und von einem leeren Kraftfahrzeug ausgeht. In diesem Fall wird der Dieb den Diebstahlversuch in der irrigen Annahme abbrechen, dass der Kraftstofftank nicht hinreichend befüllt ist. Eine solche Ausgestaltung wird in Verbindung mit den Figuren 9, 10 und 11 noch weiter im Detail beschrieben.

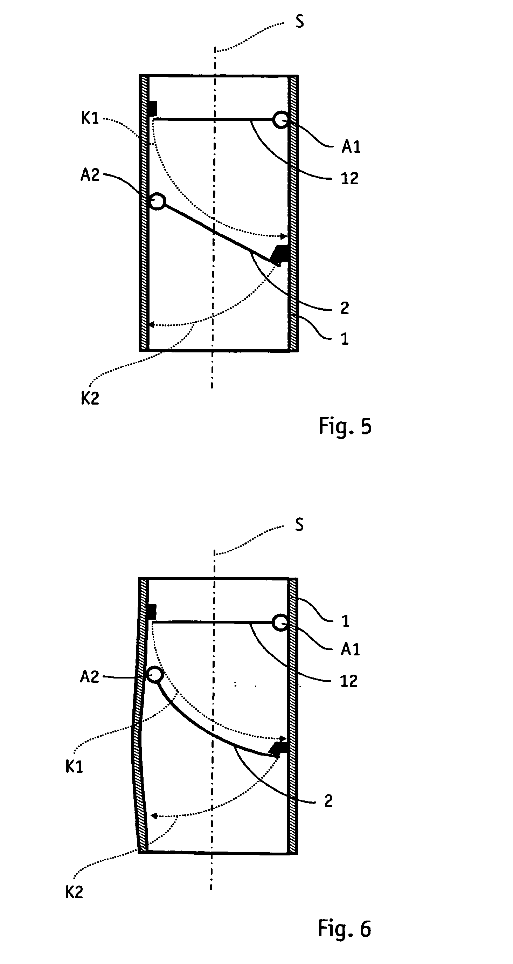

In den Figuren 5 und 6 sind zunächst zwei Ausgestaltungen eines Stutzenabschlusses schematisch wiedergegeben, die zwei grundsätzliche Anordnungen der oberen Schwenkklappe 12 und der unteren Verschlussklappe 2 zeigen. Bei dem in Figur 5 dargestellten Ausführungsbeispiel handelt es sich um eine Ausgestaltung, die ähnlich zu den in Figur 1 und 2 dargestellten Ausführungen ist. Hier sind der Anlenkpunkt A1 und der Anlenkpunkt A2 jeweils gegenüberliegend angeordnet, wobei die obere Schwenkklappe 12 und die untere Dichtklappe 2 gegensinnig zueinander verschwenken. Die Funktion dieses Ausführungsbeispiels wurde bereits in Verbindung mit Figur 1 beschrieben.

In Figur 6 ist eine andere Ausgestaltung eines Einfüllstutzens 1 dargestellt, bei der ebenfalls die beiden Anlenkpunkte A1 und A2 gegenüberliegend angeordnet sind. Hier ist allerdings die untere Dichtklappe 2 gebogen ausgebildet, so dass sich ein noch größeres Anschmiegen an die erste Kreissegmentbahn K1 ergibt. Damit die untere Dichtklappe 2 vollständig geöffnet werden kann, ist der Rohrstutzen 1 im Bereich der aufgeklappten unteren Dichtklappe 2 ausgewölbt, dass die gebogene untere Dichtklappe 2 soweit geöffnet werden kann, dass das Einfüllrohr 4 einer Zapfpistole (hier nicht dargestellt) vollständig eingeschoben werden kann.

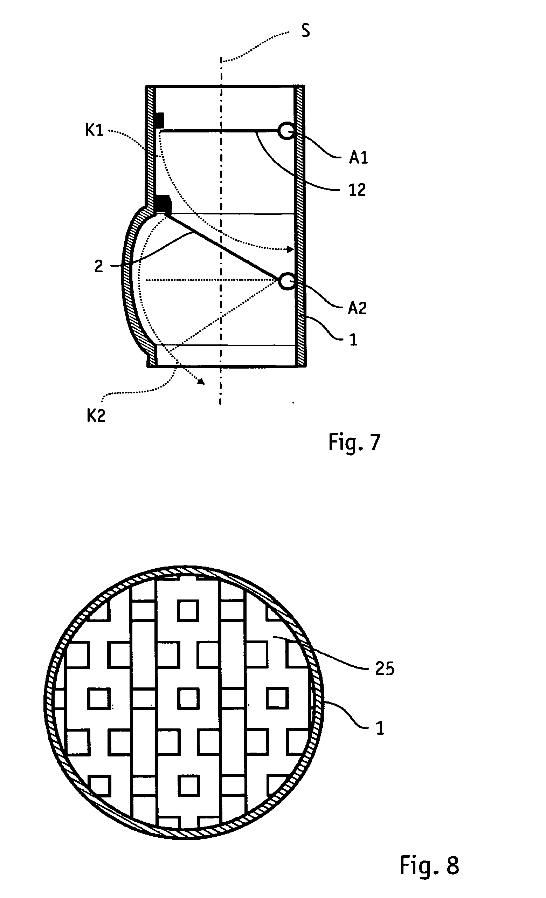

In Figur 7 ist eine dritte Ausgestaltung eines Prinzips für ein necht vell wirhsames Verkürzen eines Stutzenabschlusses dargestellt. Hier sind die Anschlagpunkte A1 und A2 auf der gleichen Seite des Stutzenrohrs 1 angeordnet, wobei der Anschlagpunkt A1 tiefer als der Anschlag für das freie Ende der Dichtklappe angeordnet ist. Damit diese Dichtklappe 2 aufgeschwenkt werden kann, ist ebenfalls im Bereich des Stutzenrohrs 1, der dem Anschlagpunkt A2 gegenüberliegt, eine Auswölbung vorgesehen, so dass das freie Ende der Dichtklappe 2 längs der Kreisbahn K2, die durch diese Auswölbung verläuft, schwenkbar ist. Diese Ausgestaltung noch Fig. 7 ist nicht erfindungsgemäß.

Figur 8 wiederum zeigt ein Diebstahlschutzmittel 25 in Form eines Siebes, das innerhalb des unteren Abschnittes des Stutzenabschlusses vorgesehen ist. Dieses Diebstahlschutzmittel 25 kann natürlich an jeder beliebigen Stelle des Rohrstutzens 1, selbst kurz vor Eintritt in den Kraftstoffbehälter, vorgesehen sein. Bei einem zweiteiligen Stutzenabschluss bzw. bei einem Kunststoffeinsatz in einen einteiligen Rohrstutzen 1 ist es bevorzugt im oberen Bereich angeordnet, so dass es zusammen mit dem Stutzenabschluss bzw. dem Einsatz austauschbar und montierbar ist. Ein solches Diebstahlschutzmittel 25 kann entweder unmittelbar mit der Wandung des Stutzenabschlusses verbunden sein oder auch an einem separaten Ringkörper bzw. einer Hülse befestigt sein, die in dem Stutzenabschluss eingesetzt ist.

So kann beispielsweise bei der in Figur 4 dargestellten Ausführungsform das Diebstahlschutzmittel 25 an einem zylindrischen Ring befestigt sein, der vor der Montage der oberen Funktionsmittel, die die untere Dichtklappe 2 und die obere Schwenkklappe 12 sowie die sonstigen Verschlussmittel umfassen, in den Stutzenabschluss eingesetzt wird. Nach unten kann ein solcher Ring nicht herausfallen, da er durch die Haltekante 24 vor einem Herausrutschen gesichert ist. Die Aufnahme für die untere Dichtklappe 2 kann den Ring dann nach oben absichern, alternativ kann er auch durch eine Nutfederverbindung oder einen entsprechenden Schiebesitz gegen Verrutschen gesichert sein.

In Figur 9 ist eine Ausgestaltung eines Diebstahlschutzmittels 25 dargestellt, dass unterhalb der unteren Dichtklappe 2 und ihrem, durch die Kreissegmentbahn K2 vorgegebenen Schwenkbereich angeordnet ist. Das Diebstahlschutzmittel 25 kann, wie auch schon in Verbindung mit der unteren Dichtklappe 2 beschrieben, zur Vermeidung einer Bauhöhenvergrößerung schräg gestellt sein bzw. aus Sicht der Einfüllöffnung 5 konkav ausgebildet sein. Beide Maßnahmen können zur Verringerung des Platzbedarfes auch kombiniert werden.

Das als Klappe ausgebildete untere Diebstahlschutzmittel 25 ist hier ebenfalls flüssigkeitsdurchlässig ausgebildet, also beispielsweise als Sieb oder Gitter ausgebildet. Dieses Sieb oder Gitter kann, bis es an einen Anschlag 28 anschlägt, schwenkbar ausgebildet sein. Wird nun ein Schlauch durch die Einfüllöffnung 5 in den Rohrstutzen 1 eingeführt, bewirkt dies ein Verschwenken des Diebstahlschutzmittels 25, bis eine gebogene oder schiefe Ebene durch das Erreichen des Anschlages 28 festgelegt ist, wobei dieser schiefen Ebene der in Diebstahlabsicht eingeführte Schlauch abgleitet und durch die seitliche Öffnung 26 in der Wandung des Stutzenrohres 1 herausgeführt wird. Diese seitliche Öffnung 26 ist natürlich so groß, dass der Schlauch ohne an den unteren Rand anzustoßen und ohne sich zu verhaken hindurchgeführt werden kann. Auf diese Weise ist es dem Dieb unmöglich, in dem Stutzen weiter zu stochern oder eine zerstörerische Gewalt auf das Diebstahlschutzmittel 25 auszuüben.

Damit weder im Unfallfalle oder bei der regulären Betankung durch die seitliche Öffnung 26 Kraftstoff unbeabsichtigt austreten kann, kann diese seitliche Öffnung durch eine federbelastete Sicherheitsklappe 27 verschlossen sein. Diese Sicherheitsklappe 27 wird durch den Schlauch aufgestoßen, ist ansonsten jedoch dichtend geschlossen. Hierzu weist sie entsprechende Dichtmittel und die Feder eine entsprechende Schließkraft auf.

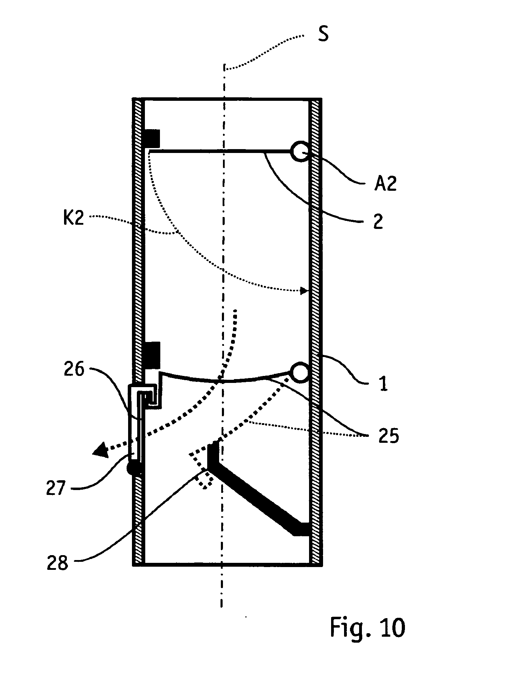

In Figur 10 ist eine weitere Ausgestaltung eines Diebstahlschutzmittels 25 dargestellt. Auch dieses Diebstahlschutzmittel 25 ist durch den eindringenden Schlauch schwenkbar, hier ist jedoch die Sicherheitsklappe 27 so ausgebildet, dass sie durch die schwenkbaren Diebstahlschutzmittel 25 gehalten ist. Im regulären Fall wird das Diebstahlschutzmittel 25 während der gesamten Betriebsdauer des Kraftfahrzeuges nicht verschwenkt, so dass hier eine feste Verbindung zwischen dem Diebstahlschutzmittel 25 über die formschlüssigen Eingriffe zur Sicherheitsklappe 27 möglich ist. Erst dann, wenn in Diebstahlabsicht der Schlauch ausgeführt wird, gerät das Diebstahlschutzmittel 25 außer Eingriff und die Sicherheitsklappe 27 wird gelöst. In diesem Fall wird über die bereits in Verbindung mit Figur 9 beschriebene Ausleitfunktion der Schlauch durch die seitliche Öffnung 26 aus dem Rohrstutzen 1 herausgeführt.

Die Ausführung nach Figur 10 hat den besonderen Vorteil, dass die Sicherheitsklappe 27 fest verriegelt ist, so dass ein Austreten von Kraftstoff selbst im Unfallfalle vermieden ist. Die Verbindung über den Formschluss kann sehr zuverlässig ausgebildet werden, so dass eine sichere Abdichtung der seitlichen Öffnung 26 sichergestellt ist.

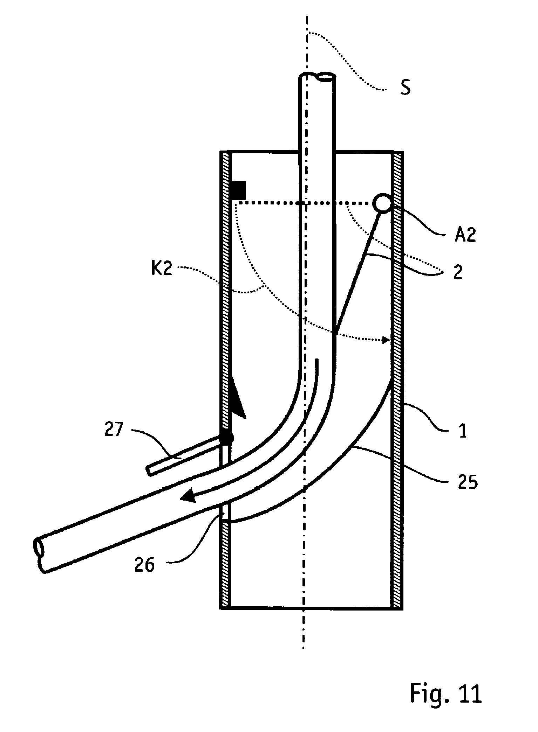

Figur 11 zeigt eine alternative Ausgestaltung eines Diebstahlschutzmittels 25, bei dem die seitliche Öffnung 26 und die Sicherheitsklappe 27 oberhalb des unteren Endes des Diebstahlschutzmittels 25 angeordnet sind. Dieses Diebstahlschutzmittel 25 ist gebogen ausgebildet, so dass auch hier der eindringende Schlauch - wie schematisch abgebildet - auf der Oberseite des Diebstahlschutzmittels 25 abgleitet und durch die Öffnung 26 außerhalb des Rohrstutzens 1 geführt wird.

Bei dem in Figur 11 dargestellten Ausführungsbeispiel ist das Diebstahlschutzmittel 25 als festes Gitter ausgebildet. Auch hier kann das Diebstahlschutzmittel 25 um einen kleinen Drehwinkel verdrehbar sein, so dass zum Beispiel auf Seiten der seitlichen Öffnung 26 etwas unterhalb ein Anschlag vorgesehen ist, der eine Verdrehung des Diebstahlschutzmittels um einige Grad ermöglicht. Durch das Schwenken dieser Diebstahlschutzmittel kann ebenfalls ein formschlüssiger Arretierungsmechanismus außer Eingriff kommen, der die Sicherheitsklappe 27 nach Art der in Figur 10 gezeigten Ausführungsform freigibt. So ist auch bei dieser Ausgestaltung durch ein leichtes Verschwenken in Folge des Drucks des eindringenden Schlauches ein Lösen der Sicherheitsklappe 27 möglich. Damit die Verriegelungsmittel des formschlüssigen Verschlusses hier das Ausleiten des Schlauches nicht stören, können diese beispielsweise an den beiden Seiten der seitlichen Öffnung 26 und nicht am unteren Rand der seitlichen Öffnung 26 vorgesehen sein, so dass der gebogene Schlauch nicht an einen Rand der Verriegelungsmittel stoßen kann.

Bei allen Ausgestaltungen mit Schlauausleitung sollte das Dienstahlschutzmittel 25 so ausgebildet sein, dass der Schlauch einfach hieran abgleiten kann, ohne sich mit einem Rand oder einer Masche zu verkeilen. Dies wird insbesondere durch feinmaschige Siebe, Gitterstäbe, deren Längsorientierung zur Abgleitrichtung des Schlauches parallel ausgerichtet ist oder ähnliche Maßnahmen sichergestellt.

Bezugszeichenliste:

1 Rohrstück

1a Rohrstutzen

2 Untere Dichtklappe

3 Verschlussmechanismus

4 Ausgaberohr

5 Obere Einfüllöffnung

6 Obere Abdeckung

7 Verriegelungsmittel

8 Verschlussfeder

9 Sicherungsfeder

10 Abgleitfläche

11 Abdeckkappe

12 Obere Schwenkklappe

13 Verriegelungsnut

14 Haltering

15 Schwenklager der Dichtklappe

16 Dichtung der Dichtklappe

17 Durchlass in dem Druckbereich der Dichtklappe

18 Unterdruck Bypass

19 Überdruck Bypass

20 Sollbruchstelle

21 Verriegelungsstift

23 Rohrstutzen

24 Haltekante

25 Diebstahlschutzmittel

26 Seitliche Öffnung im Rohrstutzen

27 Sicherheitsklappe

28 Anschlag für das schwenkbare Diebstahlschutzmittel

α Neigungswinkel der Abgleitfläche relativ zur Längsachse des Rohrstücks

K1 Erste Kreissegmentbahn der Bewegung der oberen Schwenkklappe

K2 Zweite Kreissegmentbahn der Bewegung der unteren Dichtklappe

A1 Anlenkpunkt der oberen Schwenkklappe

A2 Anlenkpunkt der unteren Dichtklappe

S Stutzenachse

## Patentansprüche

1. Stutzenabschluss für einen Einfüllstutzen eines Behälters, insbesondere eines Tanks eines Kraftfahrzeugs, mit einem längs einer Stutzenachse (S) verlaufenden Rohrstück (1) und einem Verschlussmechanismus (3), der eine in dem Rohrstück (1) angeordnete oberen Schwenkklappe (12) und eine darunter angeordnete untere Dichtklappe (2) aufweist, wobei die obere Schwenkklappe (12) und die untere Dichtklappe (2) in dem Rohrstutzen (1a) einseitig um einen Anlenkpunkt (A1, A2) angelenkt sind und durch den Druck eines eingeführten Einfüllrohres jeweils die obere Schwenkklappe (12) mit ihrem dem Anlenkpunkt (A1) gegenüberliegenden Ende längs einer ersten Kreissegmentbahn (K1) infolge einer Schwenkbewegung um den Anlenkpunkt (A1) geöffnet werden kann und die untere Dichtklappe (2) infolge einer Schwenkbewegung um den Anlenkpunkt (A2) längs einer zweiten Kreissegmentbahn (K2) geöffnet werden kann, wobei die untere Dichtklappe (2) derart angeordnet ist, dass sie im geschlossenen Zustand in einem Winkel zu der rechtwinklig zur Stutzenachse (S) angeordneten Querschnittsebene angeordnet ist, **dadurch gekennzeichnet, dass** der Anlenkpunkt (A2) oberhalb des unteren Endes der ersten Kreissegmentbahn (K1) angeordnet ist, wobei der Anlenkpunkt (A1) der oberen Schwenkklappe (12) und der Anlenkpunkt (A2) der unteren Dichtklappe (2) einander gegenüberliegenden angeordnet sind.

2. Stutzenabschluss nach Anspruch 1, **dadurch gekennzeichnet, dass** die untere Dichtklappe (2) unterhalb einer zur geschlossenen unteren Dichtklappe (2) parallelen Tangente der ersten Kreissegmentbahn (K1) angeordnet ist.

3. Stutzenabschluss nach Anspruch 1, **dadurch gekennzeichnet, dass** die untere Dichtklappe (2) gekrümmt ausgebildet ist, wobei die untere Dichtklappe (2) derart angeordnet ist, dass die konkave Seite noch oben orientiert ist.

4. Stutzenabschluss nach Anspruch 3, **dadurch gekennzeichnet, dass** der Krümmungsradius der unteren Dichtklappe (2) dem Radius der ersten Kreissegmentbahn (K1) entspricht.

5. Stutzenabschluss nach einem der Ansprüche 1 bis 4, **dadurch gekennzeichnet, dass** als Abpump- und Diebstahlschutz unterhalb der unteren Dichtklappe ein von einer mechanischen Einführsperre gebildetes, flüssigkeitsdurchlässiges Diebstahlschutzmittel (25) zum Schutz vor dem Einführen eines Rohres oder Schlauches vorgesehen ist.

6. Stutzenabschluss nach dem vorhergehenden Anspruch, **dadurch gekennzeichnet, dass** das Diebstahlschutzmittel (25) von zumindest einer im Winkel, insbesondere rechtwinklig zur Stutzenachse (S) angeordneten Strebe gebildet ist.

7. Stutzenabschluss nach Anspruch 5, **dadurch gekennzeichnet, dass** das Diebstahlschutzmittel (25) von einem Sieb gebildet ist.

8. Stutzenabschluss nach einem der Ansprüche5 bis 7, **dadurch gekennzeichnet, dass** unterhalb des Diebstahlschutzmittels (25) im Rohrstutzen (1a) eine seitliche Öffnung (26) vorgesehen ist, wobei das Diebstahlschutzmittel (25) schwenkbar ausgebildet und derart mittelbar oder unmittelbar im Rohrstutzen (1a) angelenkt und ausgebildet ist, dass bei verschwenktem Diebstahlschutzmittel (25) ein eindringender Schlauch- oder Rohrkörper durch die seitliche Öffnung (26) aus dem Rohrstutzen (1a) hinausgeführt wird.

9. Stutzenabschluss nach Anspruch 8, **dadurch gekennzeichnet, dass** das die seitliche Öffnung (26) über eine Sicherheitsklappe (27) verschlossen ist, wobei der Schwenkbereich des Diebstahlschutzmittels (25) durch einen Anschlag (28) begrenzt ist und bei maximalem Schwenkwinkel das Diebstahlschutzmittel (25) eine in die seitliche Öffnung (26) hinein laufende schiefe Ebene bildet und die Sicherheitsklappe (27) gegen die Kraft einer Rückstellfeder zum Ausleiten des in Diebstahlabsicht eindringenden Schlauch- oder Rohrkörpers geöffnet werden kann.

10. Stutzenabschluss nach Anspruch 9, **dadurch gekennzeichnet, dass** die Sicherheitsklappe (27) verriegelt ist, wobei die Verriegelung derart ausgebildet ist, dass sie durch die Schwenkbewegung des Diebstahlschutzmittels (25) aufgehoben wird.

11. Stutzenabschluss nach einem der Ansprüche 5 bis 7, **dadurch gekennzeichnet, dass** das Diebstahlschutzmittel (25) schräg im Rohrstutzen (1a) angeordnet ist und oberhalb des Diebstahlschutzmittels (25) im unteren Bereich des Rohrstutzens (1a) die seitliche Öffnung (26) zur Ausleitung eines in Diebstahlabsicht eingeführten Schlauch- oder Rohrkörpers vorgesehen ist und die seitliche Öffnung (26) durch eine federbelastete Verschlussklappe verschlossen ist.

12. Stutzenabschluss nach einem der Ansprüche 5 bis 11, **dadurch gekennzeichnet, dass** das Diebstahlschutzmittel (25) soweit unterhalb des oberen Randes des Stutzenabschlusses angeordnet ist, dass eine vollständig in den Stutzenabschluss eingeführte Zapfpistole mit ihrem Ausgaberohr (4) nicht bis zum Diebstahlschutzmittel (25) in den Rohrstutzen (1a) ragen kann.

13. Stutzenabschluss nach einem der vorhergehenden Ansprüche, **dadurch gekennzeichnet, dass** er als Abschluss oder oberes Ende eines Einfüllstutzens eines Tanks eines Kraftfahrzeugs ausgebildet ist, mit einem, einen Einsteckbereich für eine Zapfpistole bildenden, von einer Seitenwandung umgebenen, oberen Eintrittsraum, der in dem Eintrittsraum angeordneten unteren Dichtklappe (2), einem oberhalb der unteren Dichtklappe (2) angeordneten Verschlussmechanismus (3), wobei der Verschlussmechanismus (3) eine obere Einfüllöffnung (5) und zumindest eine, die obere Einfüllöffnung (5) im geschlossenen Zustand wenigstens partiell überdeckende obere Abdeckung (6) aufweist, und derart ausgebildet ist, dass die obere Abdeckung (6) durch Einführen des Ausgaberohrs (4) einer Zapfpistole in den Eintrittsraum zur Freigabe der oberen Einfüllöffnung (5) verdrängt wird, um das Einschieben des Ausgaberohrs (4) durch die obere Einfüllöffnung (5) und die untere Dichtklappe (2) zu ermöglichen, und zur Bildung einer Sicherung gegen Befüllen mit ungeeignetem Kraftstoff die obere Abdeckung (6) im geschlossenen Zustand durch wenigstens ein Verriegelungsmittel (7) blockiert ist, das derart ausgebildet ist, dass es in Abhängigkeit der sortenspezifischen Form des Ausgaberohrs (4) der Zapfpistole nur bei Befüllung mit geeignetem Kraftstoff entriegelbar ist.

14. Stutzenabschluss nach Anspruch 13, **dadurch gekennzeichnet, dass** der Eintrittsraum als Rohrstück (1) mit konstantem oder veränderlichen Querschnitt ausgebildet ist und das Verriegelungsmittel (7) von einem Sperrmittel gebildet ist, dass derart gelagert ist, dass es von dem Ausgaberohr (4) zum Entriegeln der oberen Abdeckung (6) aus der Blockierstellung heraus verdrängbar ist, wobei der Stutzenabschluss oberhalb der oberen Einfüllöffnung (5) eine zur Längsachse des Rohrstücks (1) in einem Winkel (α) angeordnete Abgleitfläche (10) aufweist, längs derer das Ausgaberohr (4) bei Einsetzen in das Rohrstück (1) von einer seitlich zur oberen Einfüllöffnung (5) versetzten Anfangsposition bis zu einer zur oberen Einfüllöffnung (5) deckungsgleichen Einsteckposition abgleitend geführt ist.

## Claims

1. A neck end for a filler neck of a container, in particular a tank of a motor vehicle, comprising a pipe section (1) running along a neck axis (S), and a locking mechanism (3) which has an upper pivoting flap (12) arranged in said pipe section (1) and a lower sealing flap (2) arranged therebelow, wherein the upper pivoting flap (12) and the lower sealing flap (2) are articulated about an articulation point (A1, A2) on one side in the pipe neck (1a), and through the pressure of an inserted filler pipe, in each case the upper pivoting flap (12), with its end opposing the articulation point (A1), can be opened along a first circle segment path (k1) as a result of a pivoting movement about the articulation point (A1), and the lower sealing flap (2) can be opened along a second circle segment path (K2) as a result of a pivoting movement about the articulation point (A2), wherein the lower sealing flap (2) is arranged in such a manner that in the closed state, said flap is arranged at an angle to the cross-sectional plane arranged perpendicular to the neck axis (S), **characterized in that** the articulation point (A2) is arranged above the lower end of the first circular segment path (K1), wherein the articulation point (A1) of the upper pivoting flap (12) and the articulation point (A2) of the lower sealing flap (2) are arranged opposing each other.

2. The neck end according to claim 1, **characterized in that** the lower sealing flap (2) is arranged below a tangent of the first circular segment path (K1), which tangent is parallel to the closed lower sealing flap (2).

3. The neck end according to claim 1, **characterized in that** the lower sealing flap (2) is curved, wherein the lower sealing flap (2) is arranged in such a manner that the concave side is oriented upward.

4. The neck end according to claim 3, **characterized in that** the curvature radius of the lower sealing flap (2) corresponds to the radius of the first circle segment path (k1)

5. The neck end according to any one of the claims 1 to 4, **characterized in that** as a pump-out and theft protection, an anti-theft means (25) for protecting against inserting a pipe or hose is provided, which anti-theft means is formed by a mechanical insertion lock and is permeable to fluid.

6. The neck end according to the preceding claim, **characterized in that** the anti-theft means (25) is formed by at least one rod which is arranged at an angle, in particular perpendicular, to the neck axis (S).

7. The neck end according to claim 5, **characterized in that** the anti-theft means (25) is formed by a screen.

8. The neck end according to any one of the claims 5 to 7, **characterized in that** below the anti-theft means (25), a lateral opening (26) is provided in the pipe neck (1a), wherein the anti-theft means (25) is formed to be pivotable and is indirectly or directly articulated and formed in the pipe neck (1a) in such a manner that with the anti-theft means (25) being pivoted, a penetrating hose or pipe body is fed through the lateral opening (26) and out of the pipe neck (1a).

9. The neck end according to claim 8, **characterized in that** the lateral opening (26) is closed via a safety flap (27), wherein the pivoting range of the anti-theft means (25) is limited by a stopper (28), and at a maximum pivoting angle, the anti-theft means (25) forms an inclined plane extending into the lateral opening (26), and the safety flap (27) can be opened against the force of a return spring for diverting the hose or pipe body penetrating with the intention of theft.

10. The neck end according to claim 9, **characterized in that** the safety flap (27) is locked, wherein the locking is configured in such a manner that it is released through the pivoting movement of the anti-theft means (25).

11. The neck end according to any one of the claims 5 to 7, **characterized in that** the anti-theft means (25) is arranged at an angle in the pipe neck (1a), and above the anti-theft means (25) in the lower region of the pipe neck (1a), the lateral opening (26) is provided for diverting a hose or pipe body inserted with the intention of theft, and the lateral opening (26) is closed by means of a spring-loaded closure cap.

12. The neck end according to any one of the claims 5 to 11, **characterized in that** the anti-theft means (25) is arranged below the upper edge of the neck end in such a manner that a fuel nozzle completely inserted into neck end cannot protrude with its discharge pipe (4) up to the anti-theft means (25) in the pipe neck (1a)

13. The neck end according to any one of the preceding claims, **characterized in that** said neck end is formed as a closure or upper end of a filler neck of a tank of a motor vehicle, comprising an upper inlet chamber enclosed by a side wall and forming an insertion region for a fuel nozzle, the lower sealing flap (2) arranged in said inlet chamber, a locking mechanism (3) arranged above the lower sealing flap (2), wherein the locking mechanism (3) has an upper filler opening (5) and at least one upper cover (6) which, in the closed state, at least partially covers the upper filler opening (5) and is formed in such a manner that by inserting the discharge pipe (4) of a fuel nozzle into the inlet chamber, the upper cover (6) is displaced for releasing the upper filler opening (5) in order to enable inserting the discharge pipe (4) through the upper filler opening (5) and the lower sealing flap (2), and for forming a protection against filling with unsuitable fuel, the upper cover (6) is blocked in the closed state by at least one blocking means (7) which is formed in such a manner that, depending on the grade-specific shape of the discharge pipe (4) of the fuel nozzle, it can only be unlocked during the filling with suitable fuels.

14. The neck end according to claim 13, **characterized in that** the inlet chamber is formed as a pipe section (1) having a constant or changeable cross-section, and the blocking means (7) is formed by a locking means which is mounted in such a manner that it can be displaced by the discharge pipe (4) from the blocking position for unlocking the upper cover (6), wherein above the upper filler opening (5), the neck end has a sliding surface (10) which is arranged at an angle (α) to the longitudinal axis of the pipe section (1) and along which the discharge pipe (4), when inserted into the pipe section (1), is guided in a sliding manner from a start position laterally offset to the upper filler opening (5) up to an insertion position which is congruent with the upper filler opening (5).

## Revendications

1. Terminaison de tubulure pour une tubulure de remplissage d'un récipient, en particulier d'un réservoir d'un véhicule, comprenant un bout de tuyau (1) s'étendant le long d'un axe de tubulure (S) et un mécanisme de fermeture (3), qui présente un clapet basculant (12) supérieur disposé dans le bout de tuyau (1) et un clapet d'étanchéité (2) inférieur disposé au-dessous, le clapet basculant (12) supérieur et le clapet d'étanchéité (2) inférieur étant articulés dans la tubulure de tuyau (1a) sur un côté autour d'un point d'articulation (A1, A2) et respectivement le clapet basculant (12) supérieur pouvant être ouvert, sous l'effet de la pression d'un tuyau de remplissage introduit, avec son extrémité opposée au point d'articulation (A1) le long d'une première bande de segment circulaire (K1) sous l'effet d'un mouvement basculant autour du point d'articulation (A1) et le clapet d'étanchéité (2) inférieur pouvant être ouvert en raison d'un mouvement basculant autour du point d'articulation (A2) le long d'une seconde bande de segment circulaire (K2), le clapet d'étanchéité (2) inférieur étant disposé de telle sorte que, dans l'état fermé, il est disposé dans un angle par rapport au plan de section transversale disposé perpendiculairement à l'axe de tubulure (S), **caractérisée en ce que** le point d'articulation (A2) est disposé au-dessus de l'extrémité inférieure de la première bande de segment circulaire (K1), le point d'articulation (A1) du clapet basculant (12) supérieur et le point d'articulation (A2) du clapet d'étanchéité (2) inférieur étant disposés en se faisant face.

2. Terminaison de tubulure selon la revendication 1, **caractérisée en ce que** le clapet d'étanchéité (2) inférieur est disposé au-dessous d'une tangente, parallèle au clapet d'étanchéité (2) inférieur fermé, de la première bande de segment circulaire (K1).

3. Terminaison de tubulure selon la revendication 1, **caractérisée en ce que** le clapet d'étanchéité (2) inférieur est conçu de façon incurvée, le clapet d'étanchéité (2) inférieur étant disposé, de telle sorte que le côté concave est orienté vers le haut.

4. Terminaison de tubulure selon la revendication 3, **caractérisée en ce que** le rayon de courbure du clapet d'étanchéité (2) inférieur correspond au rayon de la première bande de segment circulaire (K1).

5. Terminaison de tubulure selon l'une des revendications 1 à 4, **caractérisée en ce qu'**un moyen de protection antivol (25), formé par un blocage d'introduction mécanique et perméable au liquide, est prévu comme protection de pompage et antivol au-dessous du clapet d'étanchéité inférieur pour la protection contre l'introduction d'un tuyau ou d'un flexible.

6. Terminaison de tubulure selon la revendication précédente, **caractérisée en ce que** le moyen de protection antivol (25) est formé par au moins une entretoise disposée en angle, en particulier à angle droit par rapport à l'axe de tubulure (S).

7. Terminaison de tubulure selon la revendication 5, **caractérisée en ce que** le moyen de protection antivol (25) est formé par un tamis.

8. Terminaison de tubulure selon l'une des revendications 5 à 7, **caractérisée en ce qu'**une ouverture (26) latérale est prévue au-dessous du moyen de protection antivol (25) dans la tubulure de tuyau (1a), le moyen de protection antivol (25) étant conçu de façon basculante et étant articulé et conçu indirectement ou directement dans la tubulure de tuyau (1a), de telle sorte que, lorsque le moyen de protection antivol (25) est basculé, un corps de flexible ou de tuyau entrant est guidé par l'ouverture (26) latérale à la sortie de la tubulure de tuyau (1a).

9. Terminaison de tubulure selon la revendication 8 **caractérisée en ce que** l'ouverture (26) latérale est fermée par un clapet de sécurité (27), la zone de basculement du moyen de protection antivol (25) étant limitée par une butée (28) et le moyen de protection antivol (25) formant un plan oblique, entrant dans l'ouverture (26) latérale, pour un angle de basculement maximal et le clapet de sécurité (27) pouvant être ouvert contre la force d'un ressort de rappel pour la déviation du corps de flexible ou de tuyau entrant dans le but du vol.

10. Terminaison de tubulure selon la revendication 9, **caractérisée en ce que** le clapet de sécurité (27) est verrouillé, le verrouillage étant conçu de telle sorte qu'il est supprimé par le mouvement de basculement du moyen de protection antivol (25).

11. Terminaison de tubulure selon l'une des revendications 5 à 7, **caractérisée en ce que** le moyen de protection antivol (25) est disposé en biais dans la tubulure de tuyau (1a) et l'ouverture (26) latérale est prévue au-dessus du moyen de protection antivol (25) dans la zone inférieure de la tubulure de tuyau (1a) pour la déviation d'un corps de flexible ou de tuyau introduit dans le but du vol et l'ouverture (26) latérale est fermée par un clapet de fermeture sollicité par ressort.

12. Terminaison de tubulure selon l'une des revendications 5 à 11, **caractérisée en ce que** le moyen de protection antivol (25) est disposé au-dessous du bord supérieur de la terminaison de tubulure, de telle sorte qu'un pistolet distributeur, introduit complètement dans la terminaison de tubulure, ne peut pas dépasser avec son tuyau de distribution (4) jusqu'au moyen de protection antivol (25) dans la tubulure de tuyau (1a).

13. Terminaison de tubulure selon l'une des revendications précédentes, **caractérisée en ce qu'**elle est conçue comme terminaison ou extrémité supérieure d'une tubulure de remplissage d'un réservoir d'un véhicule, comprenant un espace d'entrée supérieur, formant une zone d'introduction pour un pistolet distributeur, entouré d'une paroi latérale, le clapet d'étanchéité (2) inférieur, disposé dans l'espace d'entrée, un mécanisme de fermeture (3) disposé au-dessus du clapet d'étanchéité (2) inférieur, le mécanisme de fermeture (3) présentant une ouverture d'introduction (5) supérieure et au moins un revêtement (6) supérieur recouvrant au moins partiellement l'ouverture de remplissage (5) supérieur dans l'état fermé, et étant conçu de telle sorte que le revêtement (6) supérieur est refoulé par l'introduction du tuyau de distribution (4) d'un pistolet distributeur dans l'espace d'entrée pour la libération de l'ouverture de remplissage (5) supérieure, afin de permettre l'introduction du tuyau de distribution (4) par l'ouverture de remplissage (5) supérieure et par le clapet d'étanchéité (2) inférieur, et le revêtement (6) supérieur étant bloqué dans l'état fermé par au moins un moyen de verrouillage (7) pour former une sécurité vis-à-vis du remplissage du réservoir avec du carburant inapproprié, lequel moyen de verrouillage est conçu de telle sorte qu'il ne peut être déverrouillé qu'en faisant le plein avec le carburant approprié, en fonction de la forme, spécifique au type de carburant, du tuyau de distribution (4) du pistolet distributeur.

14. Terminaison de tubulure selon la revendication 13, **caractérisée en ce que** l'espace d'entrée est conçu comme bout de tuyau (1) avec une section constante ou variable et le moyen de verrouillage (7) est formé par un moyen de blocage, qui est monté de telle sorte qu'il peut être refoulé par le tuyau de distribution (4) pour le déverrouillage du revêtement (6) supérieur à partir de la position de blocage, la terminaison de tubulure présentant au-dessus de l'ouverture de remplissage (5) supérieure une surface de glissement (10) disposée dans un angle (α) par rapport à l'axe longitudinal du bout de tuyau (1), surface le long de laquelle le tuyau de distribution (4) est guidé, en cas d'introduction dans le bout de tuyau (1), en glissant depuis une position initiale décalée sur le côté par rapport à l'ouverture de remplissage (5) supérieure jusqu'à une position d'introduction coïncidant avec l'ouverture de remplissage (5) supérieure.
